# EUROPEAN PATENT APPLICATION

(11) **EP 1 972 799 A1**
(43) Date of publication of application: **24.09.2008**
(21) Application number: 07104603.1
(22) Date of filing: 21.03.2007
(51) Int. Cl.: F16B 5/02

(54) **Adjusting screw for door frames and window casings**

(71) Applicant: Joker Industrial Co., Ltd., Changhua, (TW)
(72) Inventor: Huang, Pan-Ching, Changhua (TW)
(74) Representative: Viering, Jentschura & Partner

(57) **Abstract**

An adjusting screw (3) for door frames and window casings that is easy to fabricate and assemble includes a screw (31) running through a screw sleeve (32). The screw sleeve (32) has a longitudinal slit (324) so that when a latch flange (313) formed at a rear section (312) of the screw (31) passes through a first step orifice (323) of the screw sleeve (32) the first step orifice is expanded to a larger diameter due to elastic deformation so that the latch flange (313) can pass through and be retained at a front orifice edge (C1) of the first step orifice (323). And the screw (31) has a head end flange (314) at the rear section (312) to be retained at a rear orifice edge (C2) of the first step orifice (323). By means of such a structure fabrication is easier and assembly is faster.

## Description

### BACKGROUND OF THE INVENTION

### 1. Field of the Invention

The present invention relates to an adjusting screw for door frames and window casings and particularly to an adjusting screw for door frames and window casings that is easy to fabricate and assemble.

### 2. Description of the Prior Art

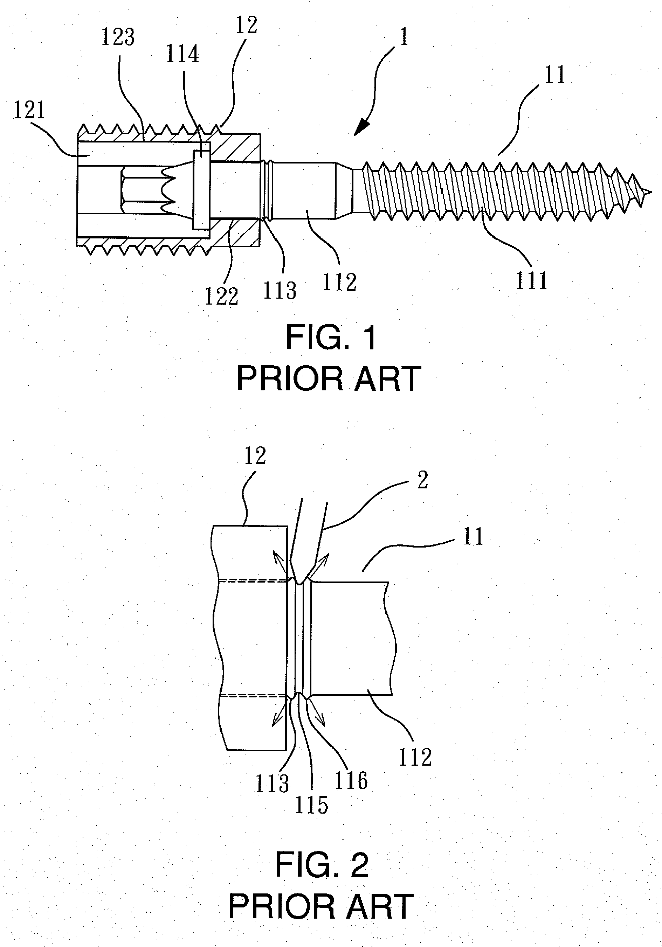

Referring to FIG. 1, a conventional adjusting screw for door frames and window casings has a screw 11 running through a screw sleeve 12. The screw sleeve 12 has a through hole 121 with a smaller first step orifice 122 at a front section and a larger second step orifice 123 at a rear section. The screw 11 has a front section 111 passing through the first step orifice 122 and a head end flange 114 at a rear section 112 to be retained at the front edge of the second orifice 123. Then the screw 11 adjacent to the outer side of the first step orifice 122 is formed a groove 115 by means of a fabrication tool 2 through compression (as shown in FIG. 2). As a result, a first flange 113 and a second flange 116 are formed on two sides of the groove 115. The first flange 113 forms a latch harness on the screw sleeve 12 to prevent the screw 11 coupled in the screw sleeve 12 from escaping.

However, the surface of the screw 11 usually has been plated. Forming the groove 115 by compression tends to damage the plated layer. Hence after used for a period of time, rust easily occurs to the fabrication spot and smears the window or door. This spoils the aesthetic appeal of the window or door.

### SUMMARY OF THE INVENTION

In view of the aforesaid problem occurred to the conventional adjusting screw, the present invention aims to provide an adjusting screw for door frames and window casings that is easy to fabricate and assemble. It includes a screw running through a screw sleeve. The screw sleeve has a longitudinal slit so that when a latch flange formed at a rear section of the screw passes through a first step orifice of the screw sleeve the first step orifice is expanded to a larger diameter due to elastic deformation such that the latch flange is retained at a front orifice edge of the first step orifice. And the screw has a head end flange at a rear section to be retained at a rear orifice edge of the first step orifice. By means of such a structure fabrication is easier and assembly is faster.

In one aspect of the invention, the screw sleeve has at least one aperture formed at a distal end of the longitudinal slit that is greater than the width of the longitudinal slit. The aperture may be, but not limited to, circular to prevent the longitudinal slit from cracking at the distal end under forces so that the alteration amount of the elastic deformation of the first step orifice can be greater.

In another aspect of the invention, the latch flange of the screw has a first slant side forming a first included angle with a vertical line, preferably at 5°

In yet another aspect of the invention, the latch flange of the screw has a second slant side forming a second included angle with a horizontal line, preferably at 30°.

In yet another aspect of the invention, the longitudinal slit may be formed in a spaced manner so that when the screw passes through the screw sleeve during assembly a tool action zone thereof can receive a ramming force to thrust the latch flange to pass through the first step orifice forcefully to fully split the spaced longitudinal slit.

The foregoing, as well as additional objects, features and advantages of the invention will be more readily apparent from the following detailed description, which proceeds with reference to the accompanying drawings.

### BRIEF DESCRIPTION OF THE DRAWINGS

FIG. 1 is a sectional view of a conventional adjusting screw.
FIG. 2 is a schematic view for forming a latch structure for a conventional adjusting screw.
FIG. 3 is an exploded view of the invention.
FIG. 4 is a perspective view of the invention.
FIG. 5 is a fragmentary schematic view of the invention showing the latch flange.
FIG. 6 is a schematic view of the invention in assembly operation-1.
FIG. 7 is a schematic view of the invention in assembly operation-2.
FIG. 8 is a schematic view of the invention in assembly operation-3.
FIG. 9 is a fragmentary schematic view of the invention in an assembly condition.
FIG. 10 is a schematic view of an embodiment of the invention in a use condition.

### DESCRIPTION OF THE PREFERRED EMBODIMENT

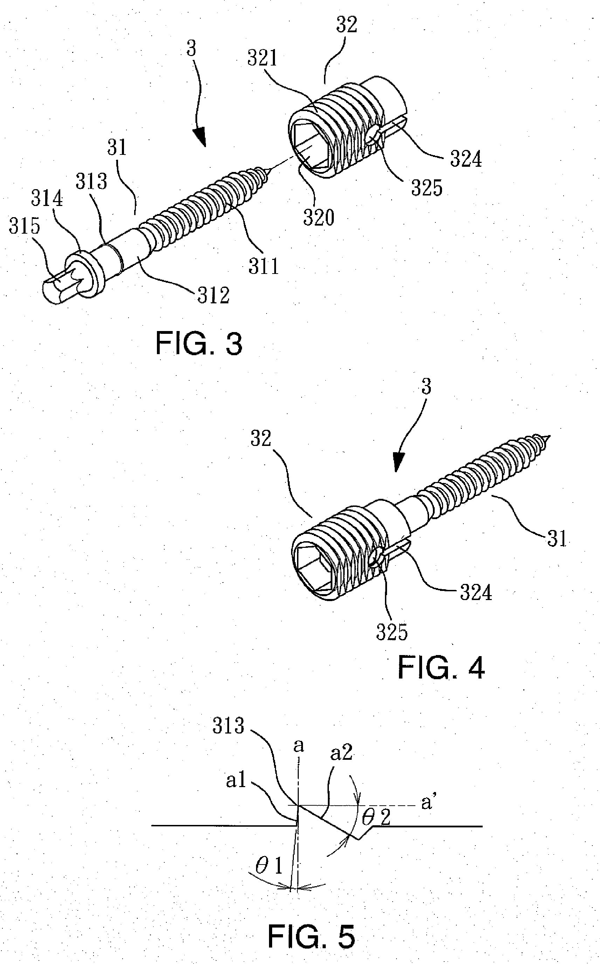

Referring to FIGS. 3 and 4, the adjusting screw 3 for door frames and window casings of the invention includes a screw 31 running through a screw sleeve 32.

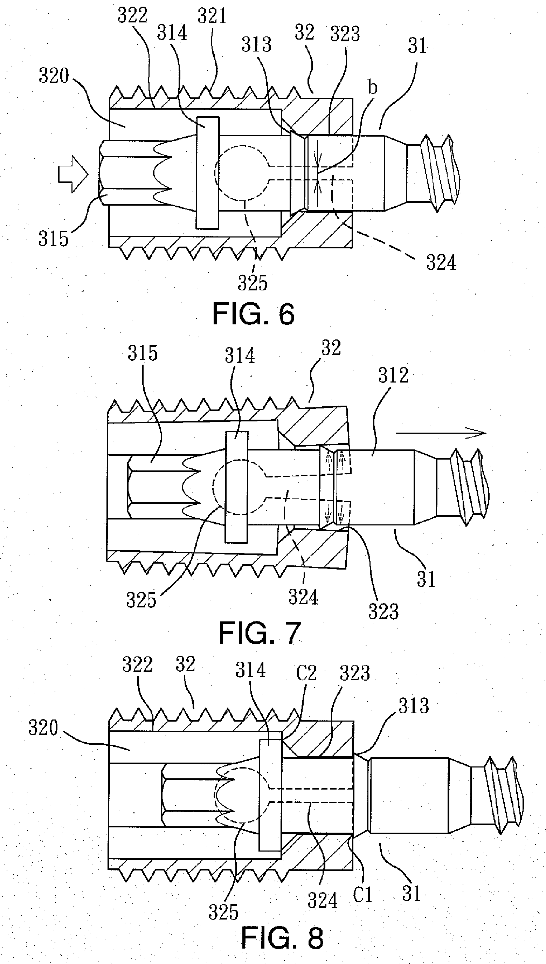

The screw sleeve 32 is a hollow barrel and has a through hole 320 which forms a first step orifice 323 (referring to FIG. 6) of a smaller diameter at a front section and a second step orifice 322 of a greater diameter at a rear section. The second step orifice 322 is polygonal to receive a tool to turn the screw sleeve 32. The screw sleeve 32 has an external screw thread 321 on an outer surface and a longitudinal slit 324, and an aperture 325 at a distal end of the longitudinal slit 324 that is wider than the width b of the longitudinal slit 324 to prevent cracking and enhance elasticity.

The screw 31 is formed in a nail profile and has an external screw thread 311 at a front section, a latch flange 313, a head end flange 314 and a tool action zone 215 at a rear section 312.

By means of the construction set forth above, when in assembly the screw 31 passes through the through hole 320 of the screw sleeve 32, with the external screw thread 311 passing through the first step orifice 323. A tool is use to apply a ramming force on the screw 31 through the tool action zone 315 to force the latch flange 313 ramming through the first step orifice 323 so that the screw sleeve 32 is expanded outward from two sides of longitudinal slit 324. An elastic deformation is generated to expand the diameter of the first step orifice 323. After the latch flange 313 has passed through the first step orifice 323, the longitudinal slit 324 returns to its original shape, and the latch flange 313 is latched at a front orifice edge C1 of the first step orifice 323. The head end flange 314 of the screw 31 is retained at a rear orifice edge C2 of the first step orifice 323. Thus assembly can be accomplished rapidly.

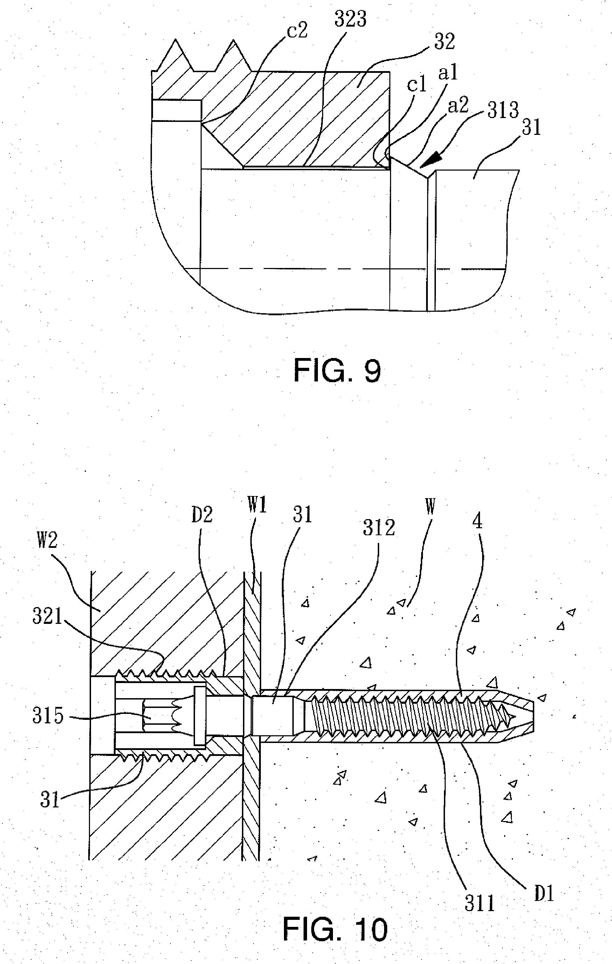

When in use (referring to FIGS. 4 and 10), first, drill a first working hole D1 on a wall W (such as a concrete wall or the like) and a second working hole D2 on a wooden window casing W2; dispose a plastic screw bushing 4 in the first working hole D1; dispose a filler W1 between the window casing W2 and the wall W (sound isolation and air impermeable material such as sponge); align the second working hole D2 with the first working hole D1; insert the adjusting screw 3 of the invention into the first working hole D1 and second working hole D2; turn a tool against the tool action zone 315 and the second step orifice 322 to fasten the screw 31 in the first working hole D1; the screw sleeve 32 is fastened to the second working hole D2 to allow the window casing W2 to compress the filler W1 against the wall W. Thereby sound isolation and air impermeable effect can be achieved.

The latch flange 313 has a first slant side a1 which forms a first included angle θ1 with a vertical line a, preferably 5°, and a second slant side a2 which forms a second included angle θ2 with a horizontal line a', preferably 30 (referring to FIG. 5). Such a design allows the screw 31 and the screw sleeve 32 to be assembled at an optimal harness position, namely to be positioned at the front orifice edge C1 and rear orifice edge C2 of the first step orifice 323 (referring to FIG. 9).

The screw 31 and the latch flange 313 are formed and fabricated before plating, thus coupling with the screw sleeve 32 does not damage the surface. Assembly can be done quickly. It offers a significant improvement over the conventional technique.

While the preferred embodiment of the invention has been set forth for the purpose of disclosure, modifications of the disclosed embodiment of the invention as well as other embodiments thereof may occur to those skilled in the art. Accordingly, the appended claims are intended to cover all embodiments which do not depart from the spirit and scope of the invention.

## Claims

1. An adjusting screw for door frames and window casings comprising a screw sleeve and a screw running through the screw sleeve, wherein:
the screw sleeve is a hollow barrel and has a through hole which forms a first step orifice of a smaller diameter at a front section and a second step orifice of a greater diameter at a rear section, and an external screw thread on an outer surface;
the screw is formed in a nail profile and has an external screw thread at a front section, a latch flange, a head end flange and a tool action zone at a rear section;
wherein the screw sleeve has a longitudinal slit such that when the screw receives action from a tool the latch flange passes through the first step orifice to generate elastic deformation and expand the diameter of the first step orifice so that the latch flange is latched at a front orifice edge of the first step orifice.

2. The adjusting screw of claim 1, wherein the screw sleeve has at least one aperture at a distal end of the longitudinal slit that is wider than the width of the longitudinal slit.

3. The adjusting screw of claim 1, wherein the second step orifice is polygonal to receive the tool to turn the screw sleeve.

4. The adjusting screw of claim 1, wherein the head end flange of the screw is retained at a rear orifice edge of the first step orifice.

5. The adjusting screw of claim 1, wherein the latch flange has a first slant side which forms an included angle of 5 ° with a vertical line.

6. The adjusting screw of claim 1, wherein the latch flange has a second slant side which forms an included angle of 30° with a horizontal line.
